Europäisches Patentamt

(19) European Patent Office

Office européen des brevets

(11) Publication number: **0 264 355**
**A1**

## (12) EUROPEAN PATENT APPLICATION

(21) Application number: **87850247.5**

(22) Date of filing: **17.08.87**

(51) Int. Cl.4: **G 05 D 23/19**
**F 24 D 19/10**

(30) Priority: **18.08.86 SE 8603464**

(43) Date of publication of application:
**20.04.88 Bulletin 88/16**

(84) Designated Contracting States:
**AT BE CH DE FR GB IT LI NL SE**

(71) Applicant: **Rydborn, Sten Ake Olaus**
**Klöxhultsvägen 21**
**S-343 00 Älmhult (SE)**

(72) Inventor: **Rydborn, Sten Ake Olaus**
**Klöxhultsvägen 21**
**S-343 00 Älmhult (SE)**

(74) Representative: **Nilsson, Lennart**
**Lennart Nilsson Patentbyra AB Box 271**
**S-311 01 Falkenberg (SE)**

(54) **A method for controlling ir-radiation heaters.**

(57) The disclosure relates to a method for controlling the supply of power to a number of radiation heaters for realising a desired operative temperature in a space at a certain desired air temperature, in which the power to the radiation heater is regulated for maintaining the desired operative temperature in response to the difference between the desired air temperature and the sensed air temperature within a regulation range corresponding to the predetermined maximum radiation boost at the workplace.

Fig 1

EP 0 264 355 A1

**Description**

A METHOD FOR CONTROLLING IR RADIATION HEATERS

The present invention relates to a method for controlling the supply of power to a number of radiation heaters of per se known type, which are often designated infra-red radiators or simply radiators, for realising a desired operative temperature in premises or at a particular local site, for example a workplace, in premises at a certain desired air temperature.

Primarily in premises where a relatively low general air temperature prevails, it is often desirable to arrange one or more places, for example workplaces, where a slightly higher operative temperature is desirable than the ambient air temperatures prevailing in the remainder of the premises, so as to create a comfortable working temperature by means of, for instance, radiation heaters, since the additional heat (which, for the purposes of clarity in this disclosure, will hereinafter be designated radiation boost) from the radiators is often preceived as being most agreeable. However, it has hitherto proved to be fraught with considerable difficulties -if not almost impossible, to be able, in an appropriate manner, to maintain a desired operative temperature at a workplace. One of the major problems involved is the disposition of the indicator or transducer in response to which the radiators are to be controlled for attaining the desired operative temperature. In simple terms, the concept of operative temperature means that temperature which is perceived by one person at a given place. The ambient air temperature may be considerably lower than the temperature which is perceived by one person, if that person enjoys a radiation boost from a radiating source of heat.

The task forming the basis of the present invention is to realise a method for controlling that radiation boost which is required to achieve desired operative temperature.

This task is solved according to the present invention in the method disclosed by way of introduction, in that, for maintaining the desired operative temperature, the supply of power to the infra-red radiator is regulated in response to the difference between the desired air temperature and sensed air temperature within a regulation range corresponding to the maximum pre-determined radiation boost at the workplace. The air temperature is sensed by means of a temperature indicator/transducer which is substantially uninfluenced by the radiation from the radiator. First, the supply of power to the radiator is restricted to a maximum ceiling comfort level. Secondly, the supply of power to the radiator is restricted in correspondence with the total power consumed by the whole heating plant. Thirdly, the supply of power is restricted in correspondence with the total power consumed by the plant, with a certain desired margin. Fourthly, the supply of power to the radiator is restricted to zero until a certain pre-determined requirement level or requirement threshold has been reached. Fifthly, the supply of power to the radiator is regulated progressively and stepwise.

The present invention will realise an extremely simple and efficient manner of regulating radiation heaters for attaining a desired operative temperature in a space or at a given place in given premises. Moreover, the method according to the present invention makes for the extremely simple selection of desired operative temperature, radiation boost etc. Furthermore, the method according to the present invention makes for simple restriction of the power consumption in correspondence with the total power consumption of the plant. In addition, the present invention makes for regulation of both radiation heaters and other heating systems, for example aero-temperators. Moreover, the method according to the present invention is relatively simple to realise using per se known electronic circuits.

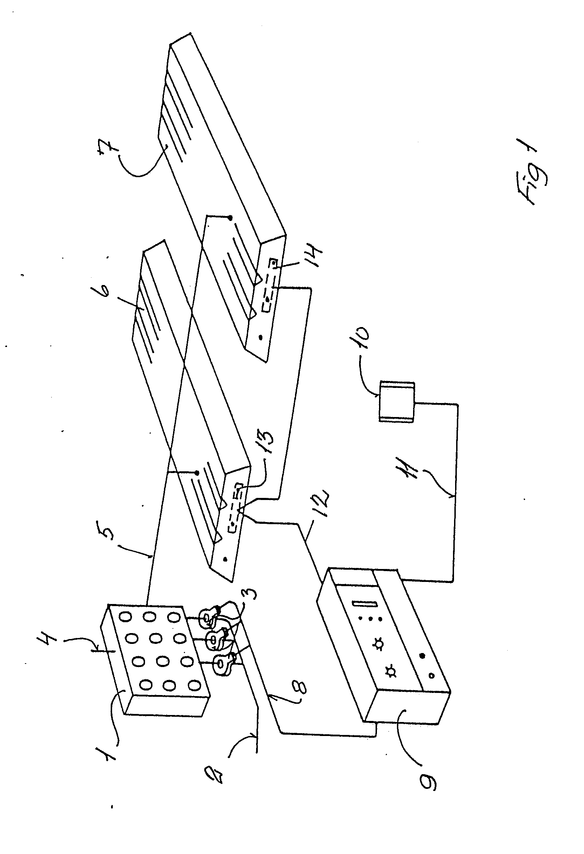

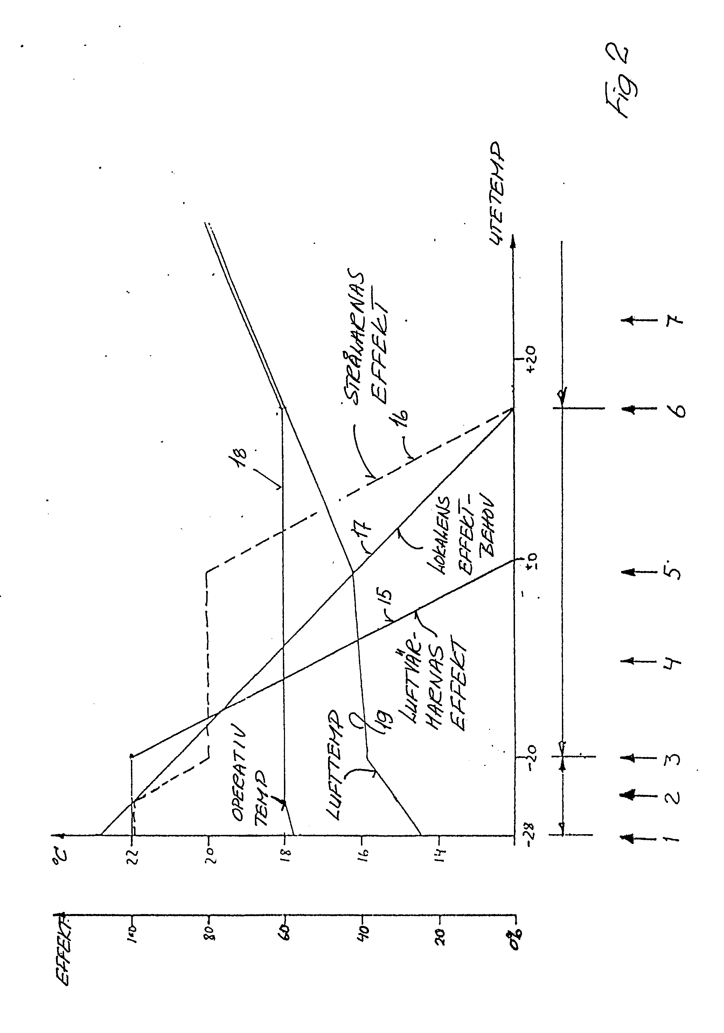

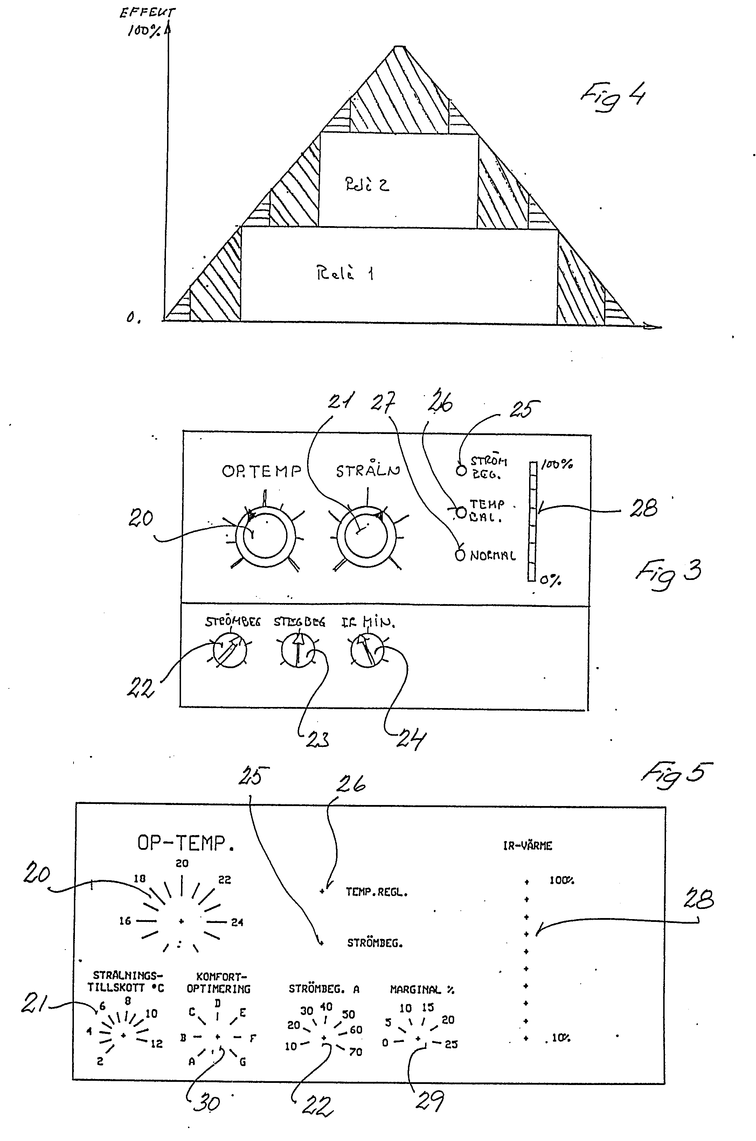

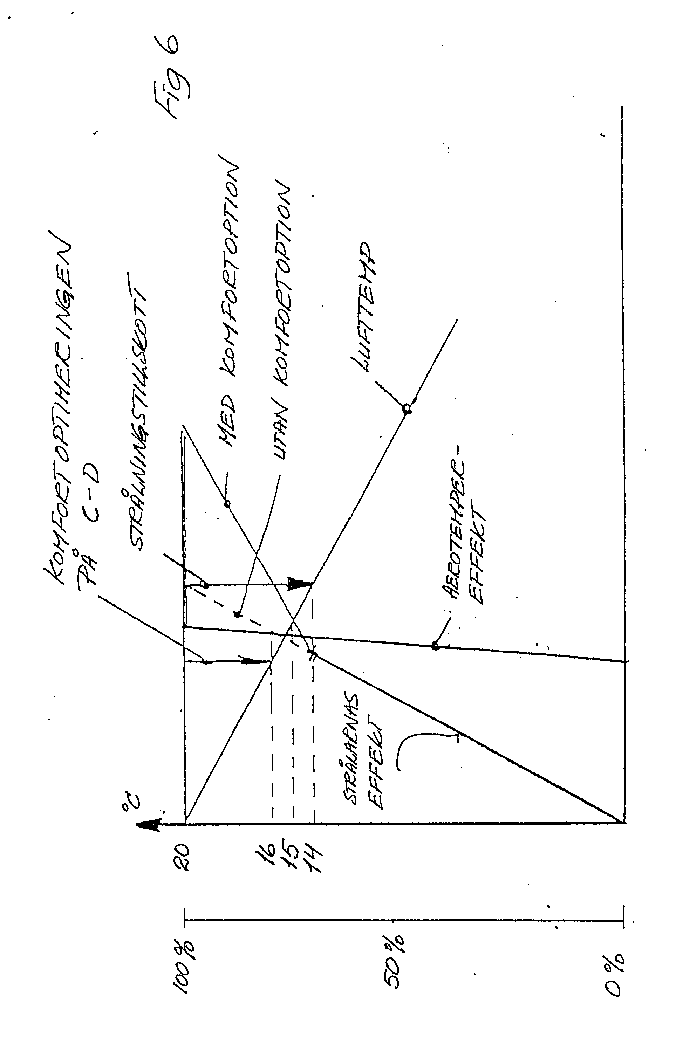

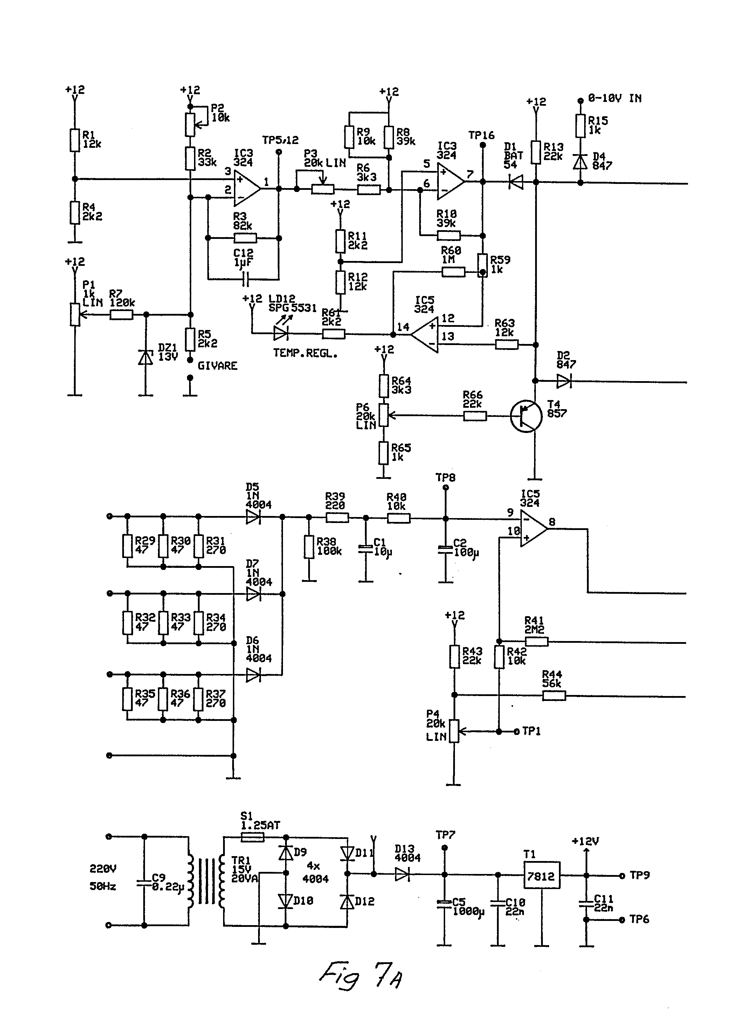

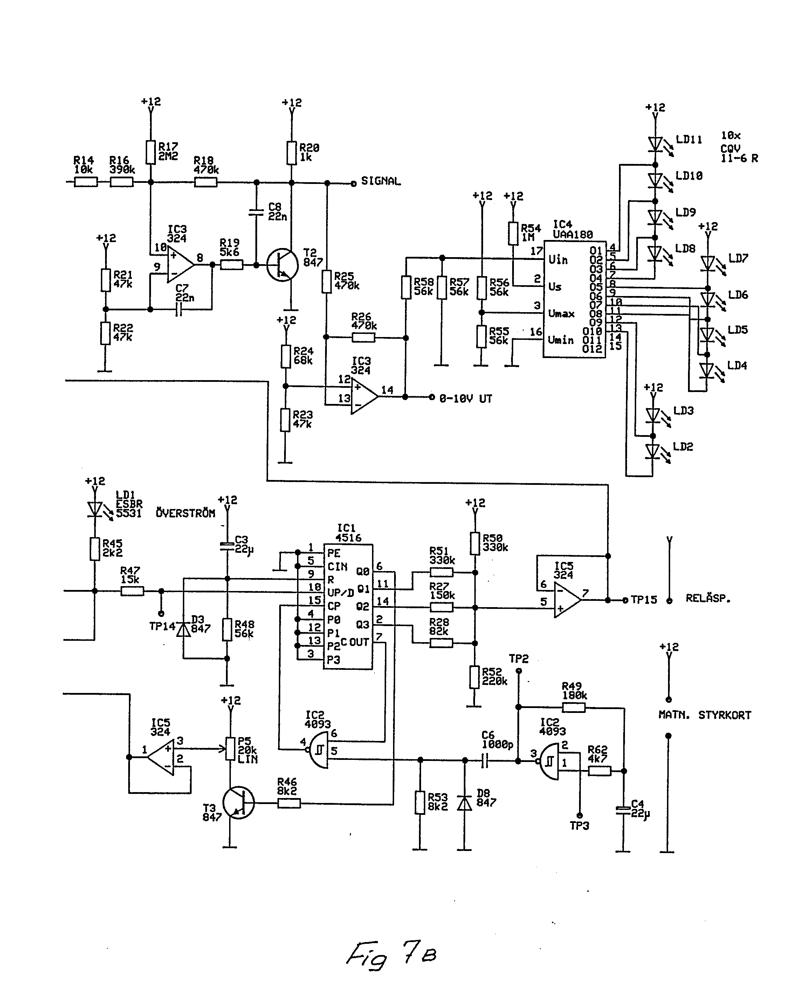

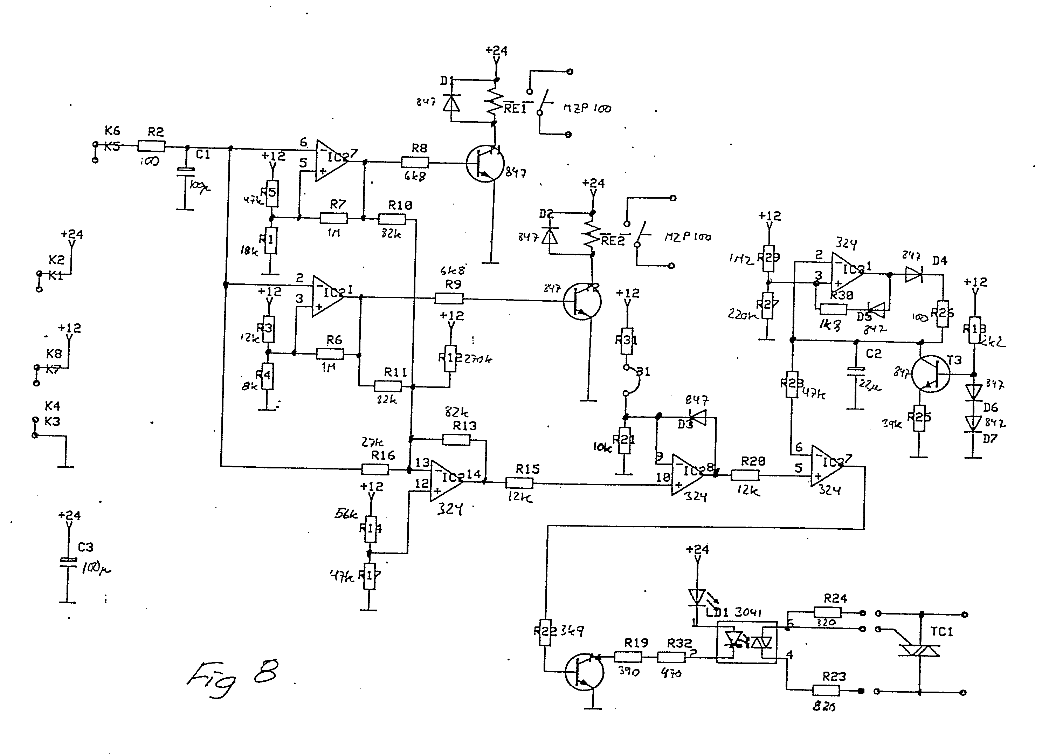

The invention will be described in greater detail below with reference to the accompanying Drawings. In the accompanying Drawings, Fig. 1 is a schematic layout of those components which may be included in a plant for carrying into effect one embodiment of the method according to the present invention. Fig. 2 is a diagram for illustrating one embodiment of the method according to the present invention. Fig. 3 schematically illustrates an operation and display panel for the electronics circuit by means of which the embodiment of the present invention illustrated in Fig. 2 is realised. Fig. 4 shows a diagram of the power regulation according to one embodiment of the present invention. Fig. 5 illustrates an operation and display panel in a modification of the method according to the present invention. Fig. 6 is a diagram of a modification of the method according to the present invention, in which the panel according to Fig. 5 is included. Fig. 7 shows a coupling diagram of a portion of an electronic circuit for realising the modified method according to the present invention as shown in Fig. 6. Fig. 8 is a coupling diagram of an electronic circuit for controlling or regulating the radiator proper which, in the present case, is fitted with three radiator elements.

Referring to the Drawings, Fig. 1 shows a portion of an electric installation with a fuse box 1 with an incoming power supply cable 2 from a meter, with at least three phase leads each with their current transformers 3. From the fuse box 1, a cable 4 departs to other power consuming units (not shown) in the plant. In the present embodiment, two IR radiators 6 and 7 are coupled by means of a cable 5 to the fuse box 1. The IR radiators 6 and 7 are of per se known type and, in the present case, are provided with one radiation element for each phase. Naturally, the IR radiators 6 and 7 are disposed at a suitable height above the target zone where it is intended to realise a desirable operative temperature. By means of a cable 8, the current transformers 3 are coupled to a box 9 which contains an electronic circuit of, for example, the type illustrated in Fig. 7, and may be fitted with a panel of the type illustrated in Figs. 3 or 5. A temperature indicator/transducer 10 is coupled, by means of a cable 11, to the electronic circuit in the box 9, which may also be designated the basic module. The temperature transducer 10 may be of per se known spatial indicator type which is in common use in this Art. By means of a cable 12, the box 9 - or more correctly the electronic circuit contained therein - is connected to an electronic circuit card 13 in the IR radiator 6 and an electronic circuit card 14 in the IR radiator 7. The circuit cards 13 and 14 are identical and may be of the type illustrated in Fig. 8. It should here be observed that the basic module or box 9 may be utilised for a relatively large number of IR radiators, and that each radiator need not be provided with a circuit card plate 13. In certain cases, a circuit card plate 13 may instead be used for regulating a plurality of IR radiators with a plurality of elements or bars.

For realising the method according to the present invention, the temperature transducer 10 must be sited at a representative place in the premises as free from the effects of the IR radiators 6 and 7 as possible in order to emit, to the electronics in the box 9, a signal representing the air temperature.

One embodiment of the method according to the present invention will now be described in greater detail with reference to Fig. 2 which is a graphic presentation of the function according to the present invention in a contemplated installation which has been dimensioned for a minimum outdoor temperature of -20° C. In this disclosure, all temperatures will be given in degrees Celsius. The number of IR radiators and their dimensioning have been adapted such that a radiation boost of 4° corresponds to 80% of the output of the IR radiatiors. The plant is further provided with air heaters of the aerotemperator type for satisfying an air heating requirement of 16°. Fig. 2 illustrates the output of the air heaters according to the solid line curve 15, the output of the radiators 6 and 7 according to the broken line curve 16 on change of the output requirements of the premises pursuant to the solid line curve 17 from 110% down to zero %. It should here be emphasised that it is desirable to maintain an operative temperature according to the solid line curve 18 to 18° at an air temperature according to the solid line curve 19 of 16°. The reason for the difference betwen the air temperature and the operative temperature of 2° is that a radiation boost of 4° will be perceived by a person as being an increase of the operative temperature of 2°. The horizontal axis of the diagram indicates the outdoor temperature and, beneath the horizontal axis, there are shown a number of positions 1-7 to which reference will be made in the following disclosure.

Between positions 1 and 3, the installation is insufficiently dimensioned for maintaining the desired operative temperature. The interval between positions 3 and 6 is the normal operative sector of the plant, while cooling will be required between positions 6, 7 and above.

In position 1, the plant will not be capable of maintaining the desired operative temperature, despite utilising all available power to 100%. The air temperature 19 has fallen by more than a whole degree below the required or desired temperature, while the "power reserve" of the IR radiators or an overdimensioning output of 20% has also been made use of. This notwithstanding, the power output is not sufficient to maintain the desired operative temperature 18, since this has fallen. Naturally, this should never happen, and, in this case, the heating plant for the premises is underdimensioned to deal with the prevailing low ambient temperature.

In position 2, the ambient temperature is, granted, below the maximum dimensioned temperature, but because the IR radiators have been dimensioned to be utilised only to 80%, this "power reserve" is called into play. The result will be that the operative temperature 18 can be maintained, but the required radiation boost will be somewhat higher than the original 4°.

In position 3, the output requirement is at desired maximum dimensioned effect and the temperatures 18 and 19 can be maintained at the desired levels.

Position 4 is in the normal regulation range of the plant and the output of the IR radiators is constant, while the altered heating requirement is wholly catered for by the regulation system of the air heaters.

In position 5, the output from the IR radiators is also sufficient to cater for the air temperature. The output 15 of the air heaters is zero, whereat the air temperature begins to rise in proportion to the reduced output requirement because of the raised ambient temperature. The output 16 of the IR radiators is reduced for maintaining constant operative temperature 18.

In position 6, the output requirement of the premises is zero, for which reason the output 16 of the IR radiators will also be zero.

In position 7, cooling is required, since the ambient temperature has contined to rise. Since the plant is not equipped with a cooling facility, nothing can be done about an elevated operative temperature.

The basic module 9 may be provided with an operation or display panel according to Fig. 3. This is provided with a potentiometer spinwheel dial 20 for setting the desired operative temperature. A potentiometer dial 21 is provided for setting the desired radiation boost. Furthermore, there is provided a potentiometer dial 22 for setting the maximum power consumption of the plant or the maximum load on the plant which corresponds to the rating of the main fuses of the plant. Moreover, the panel is fitted with a potentiometer dial 23 for setting a step-limitation which may be applied to special types of IR radiators. The potentiometer dial 24 serves for setting a threshold level or the minimum IR radiation output requirement which must be attained before the IR radiators are made operative. This is an appropraite measure, since the radiation from one element is relatively inefficient at low outputs. This threshold or minimum IR output is illustrated in Fig. 4 by the horizontally hatched triangles. On the panel of Fig. 3, there is further provided an LED 25 which enters into function on current limitation, an LED 26 which enters into function on temperature regulation, and an LED 27 which enters into function on normal operation. Moreover, there is provided an LED scale 28 which displays the power consumption.

Fig. 4 illustrates the manner in which power is supplied to the IR radiators 6 and 7 by the intermediary of the basic module 9 and the circuits 13 and 14. From the tranducer 10, a signal is fed to the basic module 9 indicating that the temperature in the premises or at the workplace has begun to fall. In this case, the electronics in the basic module 9 will emit a signal to the circuit cards 13 and 14 which entails raising the power output to the elements of the IR radiators 6 and 7. Since the radiation output from the elements is inconsiderable at low power, as has been considered above, it would probably be meaningless to supply too low a power output. Each one of the circuit cards 13 and 14 is provided with two relays RE1 and RE2 which are each coupled to their element and a thyristor TC1 which is coupled to one element in the IR radiators 6 or 7. In many cases, these elements are entitled bars. The thyristor TC1 is, naturally, used for the fine regulation of the output, while the relays RE1 and RE2 are employed for the stepping-in of the power output. As is apparent from Fig. 4, the power output regulation is effected by means of the thyristor TC1 according to the hatched regions in Fig. 4, while the relay RE1 is coupled-in in the lower blank region and the relay RE2 is coupled-in in the upper blank region. The thyristor region is divided into a horizontally hatched section and an obliquely hatched section, the horizontally hatched section being considered as a threshold region and, as was mentioned earlier, may be dispensed with. Fig. 4 thus shows the regulation of the power output from zero to 100%, the thyristor TC1 regulating the power output from zero to 100% to the thyristor-governed element or bar in the IR radiator, or froms its threshold of perhaps 25-50% of the power output, whereafter the element governed by the relay RE1 is coupled-in and the thyristor element is disconnected until the output requirement once again increases and when the thyristor element has once again reached 100%, the relay RE2 is activated and couples-in its element, whereupon the thyristor element is disconnected until the power requirement once again increases. Naturally, disconnection of the elements is effected in the same sequence.

To operate the plant according to the method of the present invention, all that is required is setting of the dials 20 and 21. The dial 20 is used to set the operative temperature, which is that temperature it is desired to experience in the room, or at the workplace and is the same as room temperature in a dwelling or the like. The dial 21 is used to set the maximum radiation boost which often corresponds to the maximum radiation which the IR radiators can attain locally.

The term maximum radiation boost does not mean the maximum radiation boost directly beneath the IR radiators, but at a place which represents a sound mean value within the working zone or occupied zone. This term is taken to mean that temperature boost which is ob tained on a maximum power output to the IR radiators. In a completed plant, the maximum radiation boost may be measured by setting the dials at maximum and placing a thermometer not too far away from that target zone where the operative temperature is to be experienced and such that the thermometer is open to air and is not subjected to radiation from the IR radiators. After 15-20 minutes, the temperature is read-off, whereafter the thermometer is moved so as to rest within the zone of radiation from the IR radiators. The thermometer is read-off after approx. 20 min., and the difference between the two temperatures is multiplied by 2, and the dial 21 is set at the value thus obtained. If the temperature difference was 3°, the dial 21 would, hence, be set at 6°. Experience has shown that, in most cases, the maximum radiation boost is 6 to 8°.

The desired operative temperature is then set using the dial 20, and the plant can be started-up. After a certain time, the operative temperature may not exactly tally with the desired value. In such an event, but a slight after-adjustment of the dial 21 will be necessary, whereafter this need not be altered if it were to become desirable to modify the operative temperature. The plant itself detternines the maximum radiation bost.

Figs. 5 and 6 illustrate a modification of the embodiment described in the foregoing. The panel in Fig. 5 largely corresponds to the panel of Fig. 3, but the dials 23 and 24 have been replaced by a dial 29 and a dial 30. The dial 29 is used to set a marginal percentage of the current limitation or fuse rating set by the dial 22. A suitable margin may be 10% of all the radiators' total power consumption. The dial 30 is used to set a comfort optimation which is illustrated in greater detail in Fig. 6. This shows a diagram of this modification of the method according to the present invention.

Fig. 6 illustrates the comfort optimation set by the dial 30, which entails a limitation of, or delay in, the output of the IR radiators. This is most simply illustrated using premises with a basic air temperature of 16° and an operative temperature of 20°. When the air temperature in these premises is 20° or higher, there is no heat requirement. If, on the other hand, the air temperature falls, this must be compensated for by an increased radiation boost from the IR radiators. When the IR radiators are on full power output, the air temperature is 16°. If the IR radiators are over-dimensioned by, as was mentioned above, for example 30%, the radiation boost will be 70% of the capacity of the radiators when the basic temperature of 16° is reached. If the air temperature continues to fall, the radiation will increase at the same rate as before, and this extra radiation may be experienced as overheating. Using the comfort optimation dial 30, it is possible to select that position where the radiation boost no longer increases so powerfully, which would otherwise be experienced as a burning sensation and, as a result, a cause of some discomfort.

Fig. 7 shows a coupling diagram of an electronic card for the basic module or box 9. The coupling diagram illustrated in Fig. 7 will be readily apparent to the skilled reader of this specification. The inputs R, S, T and 0 are the cable 8, and R, S and T each constitute their individual phase, while 0 is a zero conductor. At the bottom to the left in the Drawing, there is shown a mains assembly for the electronic circuits. Using the potentiometers P4 and P5, the power limitation value is set, as well as the percentage margin, these thus corresponding to the dials 22 and 29 in Fig. 5. At the point TP15, there will be obtained a possible load limitation signal. In the event of a load limitation signal being triggered, the LED LD1 will light up, this, corresponding to the LED 25 on the panel of Fig. 5. The possible limitation signal is fed to the regulation circuit proper by the intermediary of a diode D2 which leads to the output from a temperature comparator circuit which, simultaneously, is the input to a stepping-out phase or a final amplifier whose output "SIGNAL" is coupled to the circuit cards 13 and 14, as shown in greater detail in Fig. 8. The potentiometer P1 in the comparator circuit corresponds to the dial 20 and, thus, emits an electric signal corresponding to the desired operative temperature. The temperature indicator 10 is coupled to the input "INDICATOR". The potentiometer P2 is used for initial trimming of the circuit. A difference between the signal from the operative temperature indicator and the room temperature indicator will give a temperature difference signal proportional to the difference on the output TP5/12. The potentiometer P3 is employed to set the radiation boost, and the potentiometer P6 is used to set the comfort optimation value. The LED LD12 corresponds to the LED 26 in Fig. 5. At the top and to the right in Fig. 7, there are shown those LEDs which form the LED strip 28 and which constitute a measure of the output signal from the circuit. The input YB may be connected to further regulation and control equipment for, for instance, power ceiling limitation by means of a central computer or the like which regulates the power consumption within a large-scale plant. The signal on the output "SIGNAL" is 10 -- 0 V, the signal being 10 V when the difference between selected temperature and sensed temperature is zero, and decreasing the greater the difference. The signal on the output 14 is righted 0 -- 10 V and may be used for some type of registration or the like.

As was mentioned above, Fig. 8 illustrates the electronic circuit for one of the circuit cards 13 and 14. The signal output "SIGNAL" is coupled to the contactors K5, K6, while the contactors K1, K2 and +24 at the capacitor C3 are coupled to the relay voltage output, while the contactors K7 and K8 are coupled to the output +12 and the contactors K3, K4 to earth on the card according to Fig. 7. The output signal from the control circuit in Fig. 7 passes to the inputs 13, 2, 6, of the three IC circuits IC2, the output 14 of the lower circuit passing to a control circuit for a thyristor of triac TC1 which is connected to the circuit via an optoswitch. A so-called hacker is shown above the thyristor TC1. At a certain value of the output signal, the thyristor TC1 will give 100% and the relay RE1 will be energized and, at the same time, the control circuit of the thyristor TC1 will be obliquely loaded so that it returns to zero and possibly re-starts until it is once again at 100% and the relay RE2 receives a signal and is energized, which entails a further oblique loading or shift-out of the control circuit to the thyristor TC1 which, thereby, will once again be obliged to start from zero, as illustrated in Fig. 4. With the jumper stirrup B1 in place between the resistors R21 and R32, the horizontally hatched triangles in Fig. 4 will be realised which, in this case, are fixed but, if desired, may also be rendered variable using a potentiometer.

## Claims

1. A method for controlling the supply of power to a number of radiation heaters of per se known type which are often designated IR radiators or simply radiators, for realising a desired operative temperature in a space or at a place, for example a workplace in premises at a certain desired air temperature, **characterised in that** for maintaining the desired operative temperature, the supply of power to the radiation heater is regulated in response to the difference between the desired air temperature and the sensed air temperature within a regulation range corresponding to the pre-determined maximum radiation boost at the workplace.

2. The method as claimed in claim 1, **characterised in that** the air temperature is sensed by means of a temperature indicator which is substantially uninfluenced by the radiation from the radiation heater.

3. The method as claimed in claim 1, **characterised in that** the supply of power to the radiation heater is limited to a desired maximum comfort level.

4. The method as claimed in claim 1 and/or 3, **characterised in that** the supply of power to the radiation heater is limited in correspondence with the total power outut consumed by the plant.

5. The method as claimed in claim 4, **characterised in that** the supply of power is limited in correspondence with the total power output consumed by the plant, with a certain desired margin.

6. The method as claimed in any one of the preceding claims, **characterised in that** the supply of power to the radiation heater is limited to zero until a certain pre-determined requirement level or requirement threshold has been reached.

7. The method as claimed in any one of the preceding claims, **characterised in that** the supply of power to the radiation heater is regulated progressively and stepwise.

0264355

Fig 1

Fig 2

0264355

EFFEKT
100%

Rel 2

Rel 1

0.

Fig 4

OP. TEMP    STRÅLN    STRÖM REG.    100%
TEMP. BAL.    28
NORMAL    0%

STRÖMBEG    STEGBEG    IR MIN.

Fig 3

20    21    27    26    25
22    23    24

OP-TEMP.    IR-VÄRME

20    18    22    TEMP.REGL.    100%    28
16    24    STRÖMBEG.

STRÅLNINGS-    KOMFORT-    STRÖMBEG. A    MARGINAL %
TILLSKOTT °C    OPTIMERING
6  8  10    C  D  E    30 40 50    10 15 20
4    12    B    F    20    60    5    25
2    A    G    10    70    0

21    30    22    29

Fig 5

25    26

Fig 6

KOMFORTOPTIMERINGEN PÅ C-D

STRÅLNINGSTILLSKOTT

MED KOMFORTOPTION

UTAN KOMFORTOPTION

STRÅLARNAS EFFEKT

AEROTEMPER-EFFEKT

LUFTTEMP

°C

100 %

20

16
15
14

50 %

0 %

Fig 7A

0264355

Fig 7B

0264355

Fig 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 057 574 (HONEYWELL)<br>* abstract; page 3, line 15 - page 4, line 21; page 6, line 6 - page 9, line 24; figures 1, 2 *<br>--- | 1,6,7 | G 05 D 23/19<br>F 24 D 19/10 |
| A | EP-A-0 003 711 (ALUMINIUM PECHINEY)<br>* abstract, page 2, lines 1-9, page 3, lines 18-29, page 7, lines 6-15; figures 1, 2 *<br>--- | 2,3 | |
| A | PATENT ABSTRACTS OF JAPAN, vol. 6, no. 108 (P-123)[986], 18th June 1982; & JP - A - 57 39407 (YOSHIMI SUZUKI) 04-03-1982<br>----- | 4 | |

TECHNICAL FIELDS SEARCHED (Int. Cl.4)

G 05 D 23/00
F 24 D 19/00

The present search report has been drawn up for all claims

| Place of search | Date of completion of the search | Examiner |
|---|---|---|
| BERLIN | 23-11-1987 | BEITNER M.J.J.B. |